# EUROPEAN PATENT APPLICATION

(11) **EP 3 489 901 A1**
(43) Date of publication of application: **29.05.2019**
(21) Application number: 17386045.3
(22) Date of filing: 24.11.2017
(51) Int. Cl.: G06T 9/00, H04N 19/63, H04N 19/33, H04N 19/59

(54) **SIGNAL ENCODING**

(71) Applicant: V-Nova International Limited, Paddington London W2 6TT (GB)
(72) Inventor: Makeev, Ivan, Paddington, London W2 6TT (GB); Keszthelyi, Balázs, Paddington, London W2 6TT (GB); Poularakis, Stergios, Paddington, London W2 6TT (GB); Sanna, Michele, Paddington, London W2 6TT (GB); Ettinger, Robert, Paddington, London W2 6TT (GB)
(74) Representative: Rooney, John-Paul

(57) **Abstract**

A method of processing digital images, the method comprising: creating a downsampled version of a digital image by downsampling the digital image; upsampling the downsampled version to create an upsampled version; comparing the digital image to the upsampled version to create residual values describing differences between the digital image and the upsampled version. Applying a wavelet transform to the residual values to create transformed residual values.

## Description

### FIELD OF THE INVENTION

The disclosure broadly relates to the field of encoding digital signals, for example representing images. Particularly, but not exclusively, the disclosure relates to the encoding of signals in a tiered or hierarchical format.

### BACKGROUND OF THE INVENTION

There is an increase in compression performance of JPEG 2000 compared to JPEG, the main advantage offered by JPEG 2000 is the significant flexibility of the codestream. The codestream obtained after compression of an image with JPEG 2000 is scalable in nature, meaning that it can be decoded in a number of ways; for instance, by truncating the codestream at any point, one may obtain a representation of the image at a lower resolution, or signal-to-noise ratio. Instead of using discrete cosine transforms as is done in JPEG 1992, JPEG 2000 uses wavelet transforms.

However, the use of wavelet transforms, while mathematically elegant, introduces problems, especially with scalable codestreams. One problem is a lack of flexibility because only one transform (including the reverse transform) may be used for down and up sampling, otherwise no relevant data will be obtained. This limits how signals may be manipulated during down and up sampling, limiting the freedom available to an encoder to optimise certain aspects of an image, for example blurring, ringing and aliasing. Also, using wavelet transforms may lead to a prediction problem when attempting to reconstruct higher level signals at a decoder, and can result in the generation of a massive amount of residual data used in such reconstruction.

### SUMMARY OF THE INVENTION

There is provided a method as outlined in the appended claims.

There is provided a method of processing digital images, the method comprising: creating a downsampled version of a digital image by downsampling the digital image; upsampling the downsampled version to create an upsampled version; comparing the digital image to the upsampled version to create residual values describing differences between the digital image and the upsampled version; applying a wavelet transform to the residual values to create transformed residual values.

Preferably, wherein the downsampling uses a downsampling filter.

Preferably, wherein the downsampling filter is one of: a linear filter and a non-linear filter.

Preferably, wherein the downsampling filter is a linear filter.

Preferably, wherein the linear filter is one of: a Gaussian filter and a Lanczos filter:
Preferably, wherein the upsampling uses an upsampling filter.

Preferably, wherein the upsampling filter is a non-linear filter.

Preferably, wherein the non-linear filter is one of a bicubic or tricubic filter.

Preferably, wherein one or both of the downsampling and the upsampling do not use a wavelet transform.

Preferably, wherein the downsampled version is further downsampled to a lower level version, and the lower level version is upsampled and compared with the downsampled version to create a second set of residual values at a lower level than the residual values, and the second set of residual values are transformed using a wavelet transform.

Preferably, wherein the lowermost downsampled version and the transformed residual values are sent to a decoder to reconstruct the digital image.

Preferably, wherein the downsampling is spatial downsampling from one resolution level to a lower resolution level.

Preferably, wherein the digital image is a frame of a video signal.

Preferably, wherein the wavelet transform is a Haar wavelet.

There is provided an encoder comprising: an input to receive a signal for encoding; and a processor and memory configured to implement the method as described above.

There is provided a computer-readable medium having recorded thereon instructions to perform the method as described above.

### BRIEF DESCRIPTION OF THE DRAWINGS

Embodiments of the invention will now be described with reference to the accompanying drawings, in which:
Figure 1 is an example diagram of an encoder and corresponding encoded data according to embodiments herein;
Figure 2 is an example diagram illustrating a process of encoding and decoding a signal according to embodiments herein;
Figure 3 is an example diagram illustrating expansion of a signal including image information at different levels of quality in a hierarchy according to embodiments herein.
Figure 4 is an example diagram illustrating decoding and reconstructing a signal according to embodiments herein;
Figure 5 is an example diagram illustrating upsampling of a lower resolution image into a higher resolution image according to embodiments herein;
Figure 6 is an example diagram illustrating upsampling a lower resolution image into a higher resolution image according to embodiments herein;
Figure 7 is an example diagram illustrating upsampling a lower resolution image into a higher resolution image according to embodiments herein;
Figure 8 is a diagram illustrating an example computer architecture for executing computer code, firmware, software, applications, logic, etc., according to embodiments herein.;
Figure 9 is a flowchart illustrating an example method of reconstructing a signal according to embodiments herein;
Figures 10 and 11 combine to form a flowchart illustrating a more specific example method of reconstructing a signal according to embodiments herein;
Figure 12 is a schematic diagram illustrating an embodiment of the invention;
Figure 13 shows an example of an original image and two different downsampled versions of the original image;
Figure 14 is a flowchart showing a method 1400 of processing digital images.

### DETAILED DESCRIPTION OF THE EMBODIMENT(S)

Embodiments of the present inventions will be now described with reference to the attached Figures. It is to be noted that the following description is merely used for enabling the skilled person to understand the present invention, without any intention to limit the applicability of the present invention to other embodiments which could be readily understood and/or envisaged by the reader.

As discussed above, by way of a non-limiting example, a decoder decodes a first set of data and utilizes the first set of decoded data to reconstruct the signal according to a first level of quality. The decoder further decodes a second set of data and identifies an upsample operation, together with a scale factor, specified by the second set of decoded data. The decoder then applies the upsample operation and scale factor identified in the second set of decoded data to the reconstructed signal at the first level of quality to reconstruct the signal at a second, higher level of quality. To enhance the reconstructed signal, the decoder retrieves residual data from the second set of decoded data. The residual data indicates how to modify the reconstructed signal at the second level of quality subsequent to application of the upsampling operation and scale factor as discussed above. The decoder then modifies the reconstructed signal at the second level of quality as specified by the residual data. The decoder can be configured to repeat this process of reconstructing a signal at yet higher levels of quality.

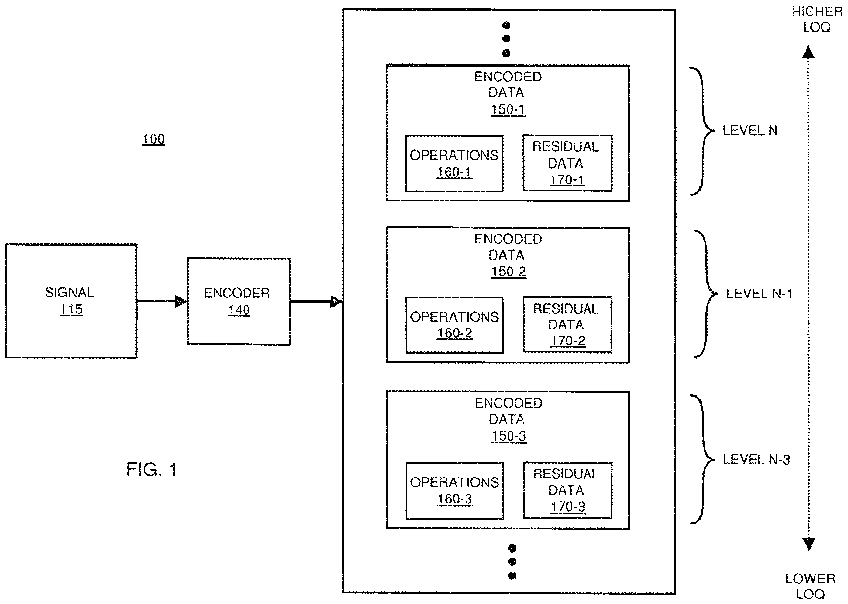

Figure 1 is an example diagram illustrating an encoder and generation of corresponding sets of encoded data according to embodiments herein.

During operation, the encoder 140 in encoding environment 100 processes signal 115 to produce encoded data 150. Note that the signal 115 encoded by the encoder 140 can be any suitable type of data information.

By way of a non-limiting example, the signal 115 can be image data, symbols, etc., indicating settings of each of multiple signal elements (e.g., pels/plane elements, pixels/picture elements, voxels/volumetric picture elements, etc.) in a respective image. As already mentioned, the image can be two dimensional (e.g., pictures, video frames, 2D motion maps, etc.), three dimensional (e.g., 3D/volumetric images, holographic images, CAT-scans, medical/scientific images, 3D motion maps, etc.) or even featuring more than three dimensions. In accordance with such an embodiment, the settings of the signal elements (as specified by the signal 115) indicate how to reconstruct the respective image for playback on a device.

Encoded data 150 produced by encoder 140 includes a hierarchy of encoded data including set of encoded data 150-1 , set of encoded data 150-2, set of encoded data 150-3, and so on.

In general, each set of encoded data at a respective level of quality in the hierarchy defines how to reconstruct a signal for the respective level of quality, and is also the basis for reconstructing the signal at higher levels of quality. As discussed below, reconstruction of the signal 115 at a respective level of quality using a set of encoded data can depend on reconstruction of the signal at a next lower level of quality.

More specifically, in accordance with one embodiment, each set of encoded data 150 includes a respective set of one or more operations and/or respective residual data for reconstructing at a particular level of quality. For example, set of encoded data 150-1 can include one or more operations 160-1 and residual data 170-1 ; set of encoded data 150-2 can include one or more operations 160-2 and residual data 170-2; set of encoded data 150-3 can include one or more operations 160-3 and residual data 170-3, and so on.

To produce the sets of encoded data 150, the encoder 140 applies downsampling operations to reduce a received signal 115 into lower levels of quality. For example, the encoder reduces original image information into a lower resolution image information in the hierarchy. The encoded data 150 produced by the encoder 140 indicates how to reconstruct the signal 115 at a lower level of quality into a signal at a next higher level of quality. The encoder 140 repeats the process at each successive lower resolution or level of quality in the hierarchy.

As previously mentioned, in addition to specifying one or more operations, the encoded data 150 can include residual data 170. In one embodiment, the residual data for a given level specifies how to modify the reconstructed signal at a respective level of quality. Modification of the reconstructed signal at a given level of quality can be performed to enhance the accuracy of the reconstructed signal, place the reconstructed signal in a better form for subsequent upsampling at higher levels of quality, etc. In one embodiment, as will be discussed later in this specification, a lowest level of encoded data in the hierarchy can be used to produce a starting point for reconstructing a respective higher level of quality of the signal 115. The next level of encoded data (just above the lowest level of quality) can be applied to the reconstructed signal at the lowest level of quality to produce a higher signal quality. Applying each set of data at a successively higher level in the hierarchy can produce a yet higher and higher resolution image.

Note that inclusion of a respective set of one or more image operations 160 and/or residual data 170 is shown by way of non-limiting example only and that a respective set of encoded data 150 at a particular level in the hierarchy may not specify any operations 160 or include any residual data 170.

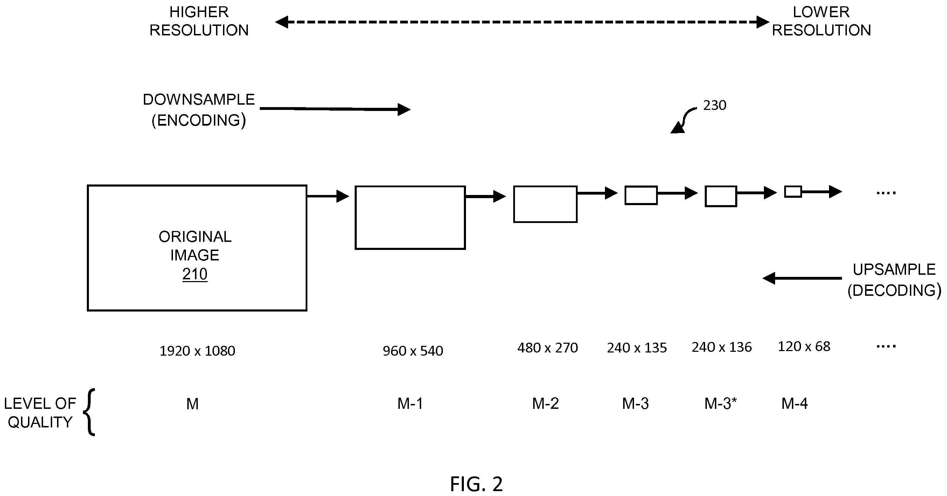

Figure 2 is an example diagram illustrating a process of encoding according to embodiments herein. In this example, assume that the original image 210 in FIG. 2 is defined by signal 115. That is, the signal 115 indicates how to set each image element in a group of multiple image elements (e.g., 1920 X 1080 image elements).

During encoding of the original image 210, the encoder 140 performs a downsampling operation at level M to produce the next lower resolution image in the hierarchy at level M-1 as shown; based on the image at level M-1 , the encoder 140 performs another downsampling operation at level M-1 to produce the next lower resolution image in the hierarchy at level M-2; and so on.

As previously discussed, at each respective level of quality, the encoder 140 produces a respective set of encoded data to convert a lower resolution or lower level of quality signal to a next higher resolution or quality signal.

In accordance with one embodiment, the encoder 140 downsamples from one level of quality to the next based on a desired scale factor. For example, by way of a non-limiting example, FIG. 2 illustrates a technique of implementing a scale factor of 2:1 to obtain the next lower level resolution from level M to Level M-1; from level M-1 to level M-2; etc. In this example, based on a 2:1 scale factor, each dimension of the signal from one level of quality to the next lower level of quality is undersampled by a factor of 2. At each successively lower level, the encoder 140 reduces a resolution of A x B to a resolution of A 2 x B/2, to a resolution of A/4 x B/4, etc.

Note that the encoder 140 can be configured to dynamically change the scale factor from one level of quality to the next in order to make encoding and/or decoding more efficient. The scale factor information for each of the levels of quality can be stored in respective sets of encoded data.

In one embodiment, each color component of image elements is codified separately based on a color space standard such as YUV, RGB or HSV, although the attributes of the signal 115, when defining an image, can be encoded according to any suitable format.

In order to allow for the necessary downsampling to successively lower levels of quality, new image elements can be added or removed at a respective level of quality as needed.

For example, addition of image elements can include replicating or mirroring borders of an image to adjust the image to an appropriate sized field of viewable elements. In the case of a video signal, and a 2:1 scale factor, for instance, downsampling tends to work well with images that have respective horizontal and vertical sizes that scale easily based on the power of 2.

To facilitate downsampling, as shown at level of quality M-3 and M-3*, the encoder 140 can adjust the resolution dimensions at each level by adding or deleting rows or columns of image elements as needed such that the image can be scaled easily from one level to the next.

More specifically, optionally, to adjust the resolution of the downsampled image, the encoder 140 adds rows and/or columns (depending on which dimension needs to be adjusted) by duplicating or mirroring a row or column and copying the row or column at or around a perimeter location of the image as shown. In one embodiment, during downsampling, a border row (such as a bottommost row) of image elements at level M-3 can be copied or mirrored and added to the bottom row of level M-3 to produce the image for level M-3* to change its dimensions. The image at level M-3* can then be downsampled further to level M-4 based on a power of 2. That is, an image at level M-3* can be downsampled from 240 image elements X 136 image elements to level M-4 having dimensions of 120 image elements X 68 image elements.

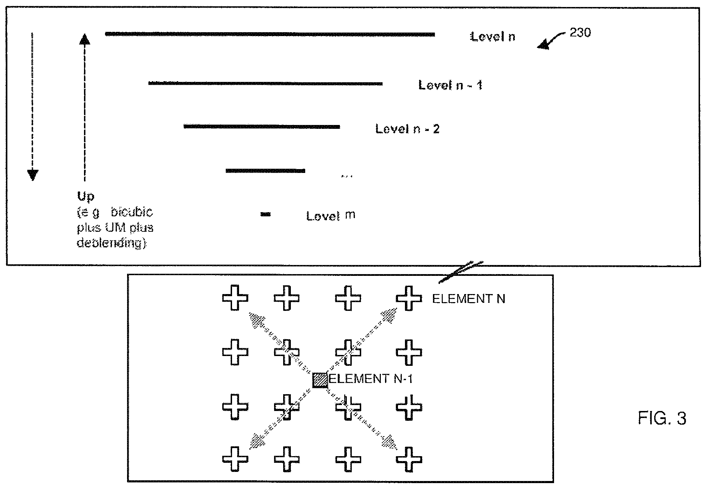

Figure 3 is an example diagram illustrating expansion of image elements at different levels according to embodiments herein.

Higher levels of quality in the hierarchy 230 are reconstructed by upsampling lower levels (using specific operations, described later) and by decoding the necessary residuals (encoded and transmitted with operations described later). It is not necessary that the kernel/operation used to upsample (e.g., on the decoding side) is of the same kind of the kernel/operation used to downsample (e.g., on the encoding side). Indeed, there are advantages to using a downsampling operation which is different to a corresponding upsampling operation, because more freedom to optimise visual aspects of an image is achieveable. For example, a trade off can be made between blurring, ringing and aliasing more flexibly this way. Also, it is not necessary that the operation used to obtain the lower levels is even a filter (linear or non-linear): it may actually be a combination of techniques. In other words, the encoding and respective decoding process as discussed herein may be asymmetrical. In one variation, the signal 115 is encoded with one or more operations at each level of quality so as to reduce an entropy of respective residual data that are applied after upsampling as will be discussed later in this specification. This may reduce an amount of data that is needed to reconstruct the original signal 115. Downsampling is typically achieved using a linear filter (for example a Lanczos or Gaussian filter), and upsampling using a non-linear filter or bicubic interpolation. However, any suitable filter may be used for either downsampling or upsampling as required.

In accordance with one embodiment, lower levels of quality are obtained from higher levels (downward path) using a tweaked bilinear filter (which from experiments seems to be one of the kernels/operations that best preserve the information, even if the resulting signal is not "the best to look at") or a trilinear filter. In other words, a reconstructed signal 115 may not be a perfect reproduction of an original image at a lower resolution. The encoded signal 115 at lower levels of quality in the hierarchy can include artifacts.

In one embodiment, results of applying a bilinear filter during encoding are tweaked so as to minimize the entropy of residuals when we upsample back to higher levels. Reducing the entropy of residual data for one or more of the levels of quality can reduce an overall amount of data that is needed to reconstruct the signal at a high level of quality. In one embodiment, the encoding/decoding is lossy to some extent. However, reconstruction of the signal using the encoded data can be a near perfect replica of an original version of the signal 115.

In one embodiment, the reconstruction of the signal 115 at higher levels from lower levels includes leveraging a combination of one or more upsample methods such as bicubic or tricubic filter operations, unsharp masking filter operations, de blending filter operations, etc. For example, during encoding, the encoder 140 can specify one or more operations that are to be included in a respective set of encoded data that are to be used for upsampling a reconstructed signal from one level of quality to the next during the decode process. For a respective level, and if necessary for each signal element, the encoder 140 can select none, one or more upsample operations (e.g., a bicubic or tricubic filter operation, a de blending filter, an unsharp masking filter, etc.) to be applied by the decoder to the reconstructed signal at each of the levels of quality in the hierarchy.

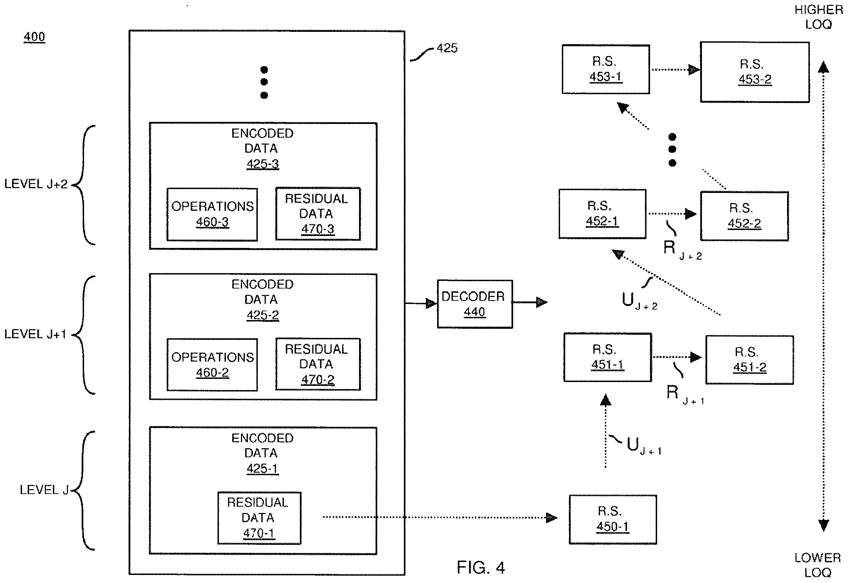

Figure 4 is an example diagram illustrating decoding of encoded data to reconstruct a signal at different levels of quality according to embodiments herein.

In a manner as previously discussed, the encoder 140 produces the set of encoded data 425 to reconstruct a respective signal 115. As shown, set of encoded data 425-1 includes a set of residual data 470-1; set of encoded data 425-2 includes operations 460-2 and residual data 470-2; set of encoded data 425-3 includes operations 460-3 and residual data 470-3; and so on up the hierarchy.

As shown, the decoder 440 in decoding environment 400 utilizes the hierarchical sets of encoded data 425 to reconstruct a respective signal 115 at different levels of quality. As previously discussed, one embodiment herein includes reconstructing a signal 115 at successively higher levels of quality in a hierarchy based on decoding sets of encoded data 425. The decoded data indicates how to perform upsampling and subsequent residual modifications from one tier to the next. In a variation, no encoded data 425 is used and the decoder can perform upsampling without the encoded data 425 by using default upsampling operations.

The decoder 440 decodes a first set of encoded data 425-1 and utilizes the first set of decoded data to produce reconstructed signal 450-1 according to a first level of quality (e.g., level J). Assume in this example that level J is the lowest level of quality and that the set of encoded data 425-1 includes appropriate data such as residual data 470-1 to produce reconstructed signal 450-1, which is the lowest level of quality in the hierarchy. This reconstructed signal 450-1 (e.g., low level of quality) provides a basis for upsampling to yet higher levels of quality in the hierarchy. The decoder 440 then decodes second set of encoded data 425-2 for processing at level of quality J+1 in the hierarchy. Based on the decoded data from set of encoded data 425-2, the decoder 440 applies one or more operations 460-2 (e.g., upsample operations Uj₊₁) to the reconstructed signal 450-1 to produce reconstructed signal 451 -1 at the J+1 level of quality. In this example, the reconstructed signal 451-1 (e.g., at the J+1 level of quality) is higher in quality than the reconstructed signal 450-1 at the J level of quality.

To enhance the reconstructed signal at a respective level of quality, the decoder 440 can be configured to retrieve and apply residual data 470-2 from encoded data 425-2.

In an example embodiment, the decoder 440 implements multi-scale entropy decoding to enhance a reconstructed signal, as now described. For example, in such an embodiment, the decoder identifies residual data 470-2 as specified by decoded set of encoded data 425-2. By way of a non-limiting example, the decoder 440 can utilize a multi-scale entropy decoder to decode the residual data 470-2. The decoded residual data specifies how to modify specific elements of the reconstructed signal at the second level of quality. For example, the decoder 440 modifies the elements of the reconstructed signal 451-1 at the level of quality J+1 in a manner as specified by the residual data 470-2.

More specifically, the residual data 470-2 associated with level of quality J+1 indicates how to modify the reconstructed signal 451-1 subsequent to application of the one or more upsampling operations 460-2 (e.g., upsample operations Uj₊₁) as discussed above. That is, the residual data 470-2 indicates how to modify specific portions of the reconstructed signal 451-1 to produce reconstructed signal 451-2. Via further processing, the decoder 440 modifies the reconstructed signal 451 -1 in a manner as specified by the residual data 470-2 to produce reconstructed signal 451-2 at level of quality J+1.

Subsequent to the processing at level of quality J+1 as discussed above, the decoder 440 then decodes set of encoded data 425-3 for processing at level of quality J+2 in the hierarchy. Based on the information in set of encoded data 425-3, the decoder 440 applies one or more operations 460-3 (e.g., upsample operations Uj₊₂) identified in the set of encoded data 425-3 to the reconstructed signal 451-2 at the J+1 level of quality to produce reconstructed signal 452-1 at the J+2 level of quality. In this example, the J+2 level of quality of reconstructed signal 452-1 is higher in quality than the reconstructed signal 451 -2 at the J+1 level of quality.

After applying operations 460-3, the decoder 440 retrieves residual data 470-3 from encoded data 425-3. The residual data 470-3 associated with level of quality J+2 indicates how to modify the reconstructed signal 452-1 subsequent to application of the one or more upsampling operations 460-3 (e.g., upsample operations Uj₊₂) as discussed above. That is, the residual data 470-3 indicates how to modify specific portions of the reconstructed signal 452-1 to produce reconstructed signal 452-2. Via further processing via operation Rj₊₂, the decoder 440 modifies the reconstructed signal 452-1 in a manner as specified by the residual data 470-3 to produce reconstructed signal 452-2.

The decoder 440 can be configured to repeat the above processing for each of multiple levels of quality in the hierarchy. For example, for each of multiple levels of quality above the J+2 level of quality, the decoder 440 repeats steps of: decoding a next higher set of encoded data in the hierarchy above a last processed level of quality; identifying one or more upsample operations based on the contents of the next higher set of decoded data; applying the one or more upsample operations (if any) identified based on the contents of the next higher set of decoded data to reconstruct the signal at a next higher level of quality; identifying residual information and/or residual characteristics (if any) specified by the next higher set of decoded data; applying the residual information to modify the reconstructed signal at the next higher level of quality. This process can be repeated until the decoder reconstructs a replica or near replica of the signal 115.

The decoder 440 can be configured to use default upsample operations and/or residual data to reconstruct the signal at the different levels of quality if no operations and/or residual data is specified for the level of quality in the hierarchy. In one embodiment, such default values are obtained based on the operations and/or residual data that were used to reconstruct lower levels of quality of the same portions of the signal.

Note that the signal 115 can be of any suitable type of data. However, in one embodiment as mentioned, the signal 115 includes image data. In accordance with such an embodiment, the decoder 440 reconstructs the original signal 115 at yet higher resolution or higher levels of quality based on the tiered sets of encoded data to eventually reconstruct an image for playback (or to be used for other purposes). In certain cases, a lower level of quality image (e.g., a reconstructed signal at level lower than the highest possible resolution in the hierarchy) can be displayed for viewing (or used for other purposes) if it is not necessary or possible to reconstruct a version with the same resolution as the original signal 115.

In one embodiment, the decoder 440 or other suitable resource initiates display of image information on a display screen device in accordance with the reconstructed signal at the higher possible level or a selected level of quality.

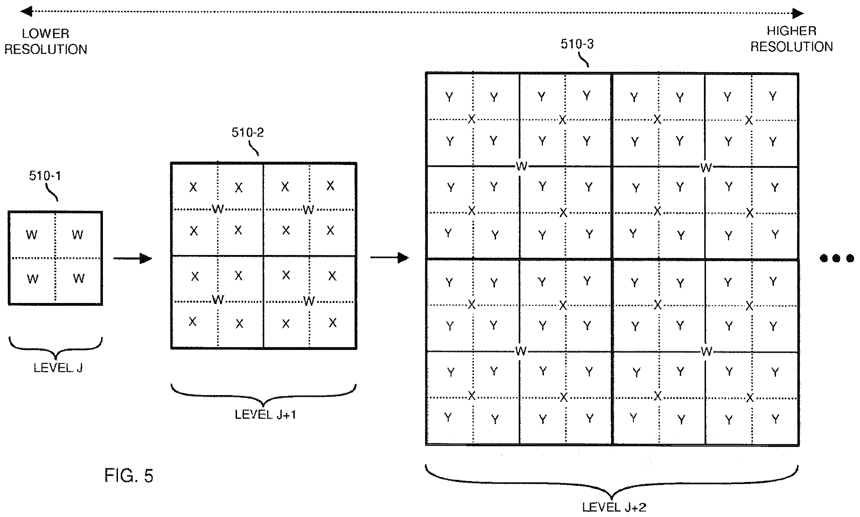

Figure 5 is an example diagram illustrating upsampling of a lower resolution image into a higher resolution image according to embodiments herein. Assume in this non-limiting example that the signal 115 and corresponding encoded data 425 indicates how to convert or expand a lower resolution image into a higher resolution image.

By way of a non-limiting example, assume that the sets of encoded data indicate how to control settings of image elements at each level of quality. For example, image 510-1 at level of quality J includes a field of image elements W; image 510-2 at level of quality J+1 includes field of image elements X; image 510-3 includes field of image elements Y; etc. Assume that reconstructed signal 450-1 specifies how to control settings of image elements W in image 510-1; reconstructed signal 451-2 specifies how to control settings of image elements X in image 510-2; reconstructed signal 452-2 specifies how to control settings of image elements Y; and so on. Thus, the decoding in Figure 4 can be used to decode image information and produce different renditions of an original signal 115 according to different levels of quality.

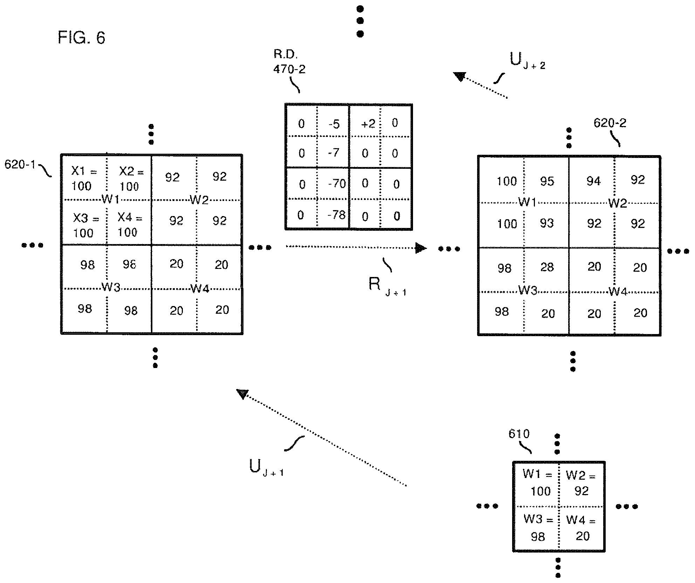

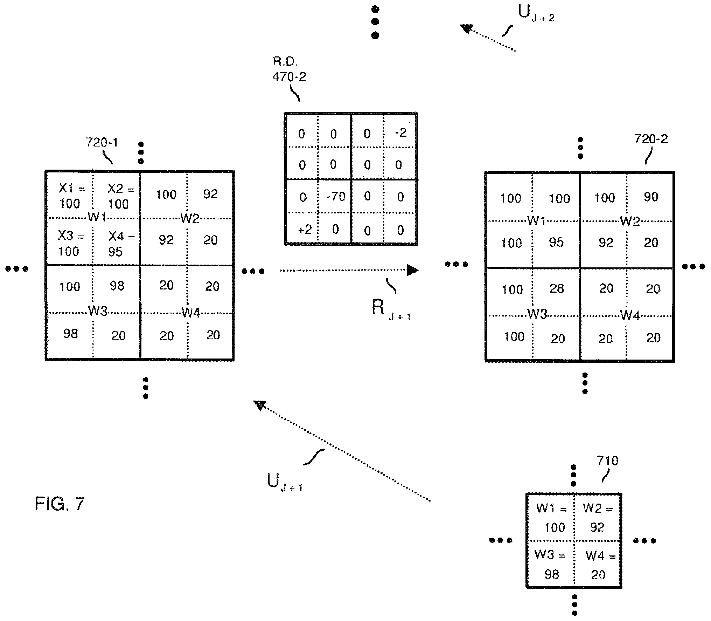

Following Figures 6 and 7 more particularly indicate how to perform upsample and apply residual data.

For example, Figure 6 is a diagram illustrating a simple example of upsampling a lower resolution image into a higher resolution image according to embodiments herein.

In this example, assume that the set of encoded data 425-1 indicates how to produce reconstructed signal 450-1. Reconstructed signal 450-1 indicates display settings of image elements as follows: image element W1 = 100, image element W2 = 92, image element W3 = 98, image element W4 = 20. In a similar manner, reconstructed signal 451-1 derived from set of encoded data 425-2 in FIG. 4 indicates display settings of image elements in image 620-1 as shown in Figure 6; reconstructed signal 451-2 in Figure 4 indicates display settings of image elements in image 620-2 as shown in Figure 6.

Thus, in this non-limiting example, image 610 is a representation of reconstructed signal 450-1; image 620-1 is a representation of reconstructed signal 451-1; image 620-2 is a representation of reconstructed signal 451-2; and so on.

As previously discussed, the operations 460-2 for level of quality J+1 indicate how to upsample at step Uj+i in FIG. 4. In this example, assume that the upsample operations 460-2 indicate to convert image element W1 of image 610 into four image elements having the same value of 100. Thus, via application of upsampling operation by decoder 440 results in expansion of image element W1 into four image elements XI, X2, X3, and X4 of the same value. In a similar manner, each of the other image elements W2, W3, and W4 are expanded into four corresponding image elements of the same value as shown.

Note that expansion of a single image element into four image elements is shown by way of non-limiting example only and that the amount of expansion of an image element from one level of quality to the next can vary depending on the embodiment. For example, a single image element can be expanded into any number of suitable image elements (e.g., not just four image elements) when upsampling from one level of quality to the next, and a suitable filtering kernel/operation can be applied to smooth out the image instead of simply replicating the element values. Also, note that image 610, image 620-1, image 620-2, may represent only a portion of an overall set of image elements at a respective level of quality.

Via application of residual data 470-2 (e.g., matrix of difference data) in modification operation R_{J+}i, the decoder 440 applies the set of residual data 470-2 to modify the settings associated with image elements 620-1. For example, the decoder 440 adjusts the value of image elements in image 620-1 by adding the offset or difference values in the matrix of residual data 470-2 to the image element values in the image 620-1 to produce image 620-2 as shown.

Figure 7 is an example diagram illustrating upsampling of a lower resolution image into a higher resolution image according to embodiments herein. However, unlike the example in Figure 6, this example in Figure 7 includes expanding a single image element into multiple image elements of different values depending on an applied upsample operation.

In this example, assume that the set of encoded data 425-1 indicates how to produce reconstructed signal 450-1. Reconstructed signal 450-1 indicates display settings of image elements in image 710 as follows: image element W1 = 100, image element W2 = 92, image element W3 = 98, image element W4 = 20. In a similar manner, in this example, reconstructed signal 451 -1 in FIG. 4 indicates display settings of image elements in image 720-1 as shown in FIG. 7. Reconstructed signal 451-2 in FIG. 4 indicates display settings of image elements in image 720-2 as shown in FIG. 7.

Thus, in this non-limiting example, image 710 is a representation of reconstructed signal 450-1; image 720-1 is a representation of reconstructed signal 451-1; image 720-2 is a representation of reconstructed signal 451-2; and so on.

As previously discussed, the operations 460-2 for level of quality J+1 indicate how to upsample at step Uj+i in FIG. 4. Assume that the upsample operations 460-2 in this example indicate how to convert image element W1 of image 610 into four image elements having different values. For example, execution of the operations 460-2 by decoder 440 converts the image element W1 into four different valued image elements in image 720-1: XI = 100, X2 = 100, X3 = 100, and X4 = 95. Thus, in this example, instead of expanding the image element W1 = 100 into four image elements (e.g., XI, X2, X3, and X4) set to 100, the decoder 440 sets XI, X2, X3, and X4 to different values than the value of W1.

In one embodiment, the decoder 440 applies one or more operations such as a bicubic or tri cubic filter operation, a de blending filter, an unsharp masking filter, etc., to expand a single signal element into multiple signal elements having different display setting values. The values assigned to the expanded elements can be selected based at least in part on settings of neighboring signal elements.

As mentioned above, the values of the signal elements indicate any information such as color, hue, luminance, etc., such that a respective display device can display the image to a user.

In a similar manner, each of the other image elements W2, W3, and W4 are expanded into four corresponding image elements of the same or different value as shown in FIG. 7.

Note again that expansion of a single image element into four image elements is shown by way of non-limiting example only and that the amount of expansion of an image element from one level of quality to the next can vary depending on the embodiment. For example, a single image element can be expanded into any number of suitable image elements (e.g., not just four image elements) when upsampling from one level of quality to the next. Also, image 710, image 720-1, image 720-2, may represent only a portion of an overall set of image elements at a respective level of quality.

Subsequent to applying the one or more upsampling operation as discussed above to expand image elements, the decoder applies residual data 470-2 to image 720-1 to produce image 720-2. Using residual data 470-2 (e.g., matrix of difference data) in modification operation R_{J+}i, the decoder 440 applies the set of residual data 470-2 to modify the settings associated with image elements 720-1. For example, the decoder 440 adjusts the value of image elements in image 720-1 by adding the offset or difference values in the matrix of residual data 470-2 to the image element values in the image 720-1 to produce image 720-2 as shown. As mentioned above, the decoder repeats these steps at different levels of quality in the hierarchy to reconstruct signal 115.

### Use of Different Upsample Operations at Different Levels of Quality

In accordance with one implementation, the sets of encoded data can specify different upsample operations to apply at different levels to reconstruct a respective signal 115. For example, set of encoded data 425-2 may specify a first upsample such as a bicubic or tricubic filter operation in which to upsample (e.g., Uj₊₂) from level of quality J+1 to level of quality J+2. Set of encoded data 425-3 may specify a second upsample such as a de blending filter operation in which to upsample (e.g., Uj₊₃) from level of quality J+2 to level of quality J+3, and so on. The ability to specify and apply different upsample operations (or combinations thereof) at each level of quality provides flexibility as the decoder 440 is not required to reconstruct a signal using only a default upsample operation.

### Use of a Same One or More Upsample Operation at Multiple Levels of Quality

In accordance with another implementation, an upsample operation specified for use at one level of quality can be used at successively higher levels of quality to reconstruct a respective signal 115. For example, the decoder 440 can be configured to apply the one or more upsample operations as specified by the set of encoded data 425-2 to reconstruct the signal 115 at level of quality J+2 as previously discussed.

The set of encoded data 425-3 (e.g., a higher level of quality) may not specify any upsample operations. In accordance with such an embodiment, the decoder 440 can be configured to reconstruct the signal 115 at higher levels of quality until a respective set of decoded data for a higher level of quality indicates to either discontinue application of the upsampling operation and/or until a set of encoded data at a higher level of quality indicates to apply a different set of one or more upsample operations.

Thus, embodiments herein can include decoding a set of encoded data at a higher level of quality. In response to identifying that the set of encoded data at the higher level of quality does not specify a particular upsample operation, the decoder 440 applies the upsample operations used at a lower level of quality to reconstruct the signal at a higher level of quality.

### Use of Residual Data at Multiple Levels of Quality

In accordance with yet further implementations, residual data specified for use at one level of quality can be used at successively higher levels of quality to reconstruct a respective signal 115 until a higher level of quality indicates to use different residual data or the higher level of quality indicates to discontinue application of the residual data. For example, the decoder 440 can retrieve residual data from a set of decoded data at a particular level of quality. As previously discussed, the residual data indicates how to modify the reconstructed signal at the particular level of quality subsequent to application of a specified upsampling operation. The decoder 440 modifies the reconstructed signal at the particular level of quality as specified by the set of encoded data. Additionally, the decoder 440 modifies a reconstructed signal at a level of quality higher than the particular level of quality.

As an example, assume that the decoder 440 identifies residual data 470-2 as specified by set of encoded data 425-2. The residual data 470-2 specifies a location of elements in the reconstructed signal at level of quality J+1 and how to modify the elements of the reconstructed signal 451 -1 at the level of quality J+1. The decoder 440 modifies the elements or portions of the reconstructed signal 451-1 at the level of quality J+1 in a manner as specified by the residual data 470-2. The decoder 440 uses the residual data 470-2 also for the reconstruction of the signal 115 at higher levels of quality (e.g., J+2 and higher) until a respective set of decoded data for a higher level of quality indicates to use different residual data at the higher levels of quality.

### Applying Upsample Operations to Specified Portions of a Reconstructed Signal

In accordance with yet further implementations, each set of encoded data can specify different upsample operations that should be applied by the decoder to specific portions of the reconstructed signal. A portion of the signal is characterized by a different number of signal elements (greater than or equal to one) depending on the particular level of quality. As an example, assume that the decoder 440 processes the set of decoded data at level of quality X to identify a specific portion (e.g., as indicated by location) of the reconstructed signal at the level of quality X-1 in which to apply the upsample operation specified by the set of decoded data. The decoder 440 then applies the upsample operation to the specific portion (e.g., a portion such as less than all of the image elements if it is a reconstructed image) of the reconstructed signal at the X-1 level of quality (e.g., level of quality just below X level of quality) to reconstruct the signal at the X level of quality.

As an example, a set of encoded data for a given level of quality can specify a first operation to apply to a first portion (e.g., first region, a first type of data, etc., in the reconstructed signal) of a reconstructed signal to perform upsampling; the set of encoded data for the given level of quality also can specify a second operation to apply to a second (different) portion (e.g., a second region, a second type of data, etc., in the reconstructed signal) of the reconstructed signal; and so on.

The set of encoded data may not specify any upsample operations for specific portions of the signal. In accordance with an embodiment, for each portion of the signal, the decoder 440 can be configured to reconstruct the signal 115 at higher levels of quality until a respective set of decoded data for a higher level of quality indicates to either discontinue application of the upsampling operation and/or until a set of encoded data at a higher level of quality indicates to apply a different set of one or more upsample operations. In accordance with further embodiments, the decoder 440 can process the sets of data at each level of quality to identify an attribute type (e.g., in-focus region, out-of-focus region, human face, text, other objects, in fast motion, still, in slow motion, etc.) of a specifically identified portion of the reconstructed signal in which to apply the upsample processing. The decoder applies specified operations to any data in the reconstructed signal of the specified attribute type. The decoder 440 may need to analyze a reconstructed signal to identify appropriate portions of the reconstructed signal in which to apply the specified one or more operations.

In one implementation, the decoder 440 can map the attribute type specified in a set of encoded data to a set of one or more upsample operations that will be carried out on a portion of the reconstructed signal having the specified attribute type. For example, for each portion of the signal of the specific attribute type for the specified level of quality, the decoder 440 utilizes the set of one or more upsample operations defined by its attribute type as default upsample operations for the reconstruction of the immediate level of quality and subsequently higher levels of quality of that portion of the signal. The same operations can be used until a respective set of decoded data for a higher level of quality than the first level of quality specifies to use for the signal or for portions of the signal different attribute types.

Thus, as specified by set of encoded data for a given level of quality, specified operations can be applied to a specific attribute type of data for the given level of quality as well as for data at higher levels of quality having the same specified attribute type.

### Use of Different Scale Factors at Different Levels of Quality

In accordance with further implementations, the decoder 440 can be configured to decode each of the set of encoded data to identify a scale factor value (e.g., dimensions or resolution of a signal) for upsampling a respective level of quality. As its name suggests, the scale factor value can specify a resolution in which to upsample the reconstructed signal at level of quality J+1 into the reconstructed signal at the level of quality J+2. As specified by the scale factor, the decoder 440 can be configured to upsample the reconstructed signal at the level of quality J+1 into the reconstructed signal at the level of quality J+2 in lieu of performing the upsampling in accordance with a default scale factor value known to the decoder 440.

If there is no scale factor specified for a specific upsampling of the reconstructed signal from one level of quality to another, the decoder uses a predetermined default scale factor or a scale factor specified at a previous lower level of quality. In one embodiment, the decoder 440 utilizes scale factor values as specified by sets of decoded data at different levels of the hierarchy to reconstruct the signal 115 in lieu of performing upsampling in accordance with default scale factor values for the different levels of quality in the hierarchy.

The sets of encoded data can specify different scale factors for different levels of quality. For example, in one embodiment, the scale factor values for different levels of quality (either specified in the sets of encoded data at each level of quality or known by the decoder 440 as default scale factor value if no scale factor is specified in the set of encoded data) include a first scale factor value and a second scale factor value. Assume in this example that the first scale factor value specified by a set of decoded data level of quality J+1 indicates a scale factor for upsampling from level of quality J to level of quality J+1. The set of encoded data can indicate to upsample from level of quality J+1 to level of quality J+2 in a manner as previously discussed using the second scale factor. The first scale factor value is different than the second scale factor value. Thus, the decoder 440 can upsample according to different scale factors from one level to the next. In yet a further embodiment, the decoder 440 first upsamples the signal to the resolution obtained by multiplying the resolution of the first level of quality by the first scale factor. At that point, as previously discussed, based on the second scale factor value at a higher level of quality, the decoder 440 eliminates outmost planes of the reconstructed signal (e.g., removes one or more rows or columns at the border of the image for a 2D signal) in order to reconstruct a signal at the resolution specified with the second scale factor.

### Simulating Artifacts in a Reconstructed Signal

In accordance with another implementation, the decoder 440 can be configured to decode one or more sets of encoded data to identify characteristics of effects that are to be simulated upon signal reconstruction. For example, the signal characteristics specified in a respective set of encoded data can indicate to the decoder 440 how to simulate certain effects that are to be added to a reconstructed version of the signal at a particular level of quality (e.g., such as at the highest or selected level of quality). In accordance with such an embodiment, the set of encoded data does not need to indicate the specific elements of the reconstructed signal that should be modified and the specific modifications to apply. Instead, the set of encoded data indicates an effect or enhancement to be applied to or distributed in the reconstructed signal.

As an example, the decoder 440 can be configured to decode a set of data to identify spectral characteristics associated with effects found in an original version of the residuals that represent lower priority information. Such effects can be attributes such as film grain, camera sensor noise, lower priority details of the signal, etc. The spectral characteristics in the encoded data can indicate to the decoder 440 how to simulate the effects by adding such effects to a reconstructed signal at one or more levels of quality in the hierarchy. The spectral information about adding the effects may indicate the occurrence of the effects to be simulated and a respective distribution of the effects. However, the spectral information need not indicate an actual location or the specific values of the residuals which would be needed to closely reconstruct the artifacts that are present in the original version of the signal.

In accordance with further implementations, for each signal element, the decoder 440 utilizes the spectral characteristics as specified by the set of decoded data also to characterize simulated effects for higher levels of quality than the level of quality at which the spectral information was identified. That is, in a manner as previously discussed, for each portion of the reconstructed signal, the decoder 440 can use the characteristics of simulated residuals specified at previous levels for multiple levels of quality in the hierarchy until a respective set of decoded data for a higher level of quality specifies to use, for the reconstructed signal or for specific portions of the reconstructed signal, different spectral characteristics of simulated effects. Thus, the decoder 440 can be configured to utilize the set of spectral characteristics to modify the elements of the reconstructed signal for display at a respective higher level of quality in a manner as specified by the spectral information. In one embodiment, the decoder applies the spectral characteristics information at the level of quality in which the reconstructed signal is displayed on a display device.

### Signal Reconstruction based on Multiple Reconstructed Planes of Information

In accordance with one implementation, the decoder 440 receives separate signal hierarchies for the different color planes of the signal (e.g., Red Green Blue, YUV, HSV or other types of color spaces). The separate signal hierarchies can feature independent (and potentially different) scale factors, operations and highest levels of quality. When the different reconstructed color planes feature different levels of quality, the decoder upsamples the lower-resolution color planes in order for them to match the resolution of the color plane with the highest level of quality, and subsequently joins all the reconstructed color planes into a reconstructed color signal to send to the display device. Upsampling can therefore include reconstructing 3 or more planes of information for each level of quality in the hierarchy. A combination of the plane information at a respective level of quality defines an image or reconstructed signal for the respective level of quality.

For example, the decoder 440 can reconstruct three planes at each level of quality. One plane can represent luminance (e.g., Y in the YUV standard) associated with image elements; another plane can represent blue chrominance (e.g., U in the YUV standard) associated with image elements; and another plane can represent red chrominance (e.g., V in the YUV standard) associated with image elements. Each plane can be encoded according to different levels of quality. For example, the luminance plane, which is the most important one when viewing a respective image, can be encoded with the highest level of detail; the chrominance planes can be encoded with a lower level of detail because they are less important when viewing a respective image.

In accordance with an implementation, the method of reconstructing a signal at successively higher levels of quality in a hierarchy further includes the steps of retrieving auxiliary information, in particular information on motion, warp information and so on, from the second set of decoded data, the auxiliary information indicating parameters influencing the application of the upsampling operation(s) to the signal at the first level of quality and influencing the modification of the reconstructed signal at the second level of quality as specified by the residual data.

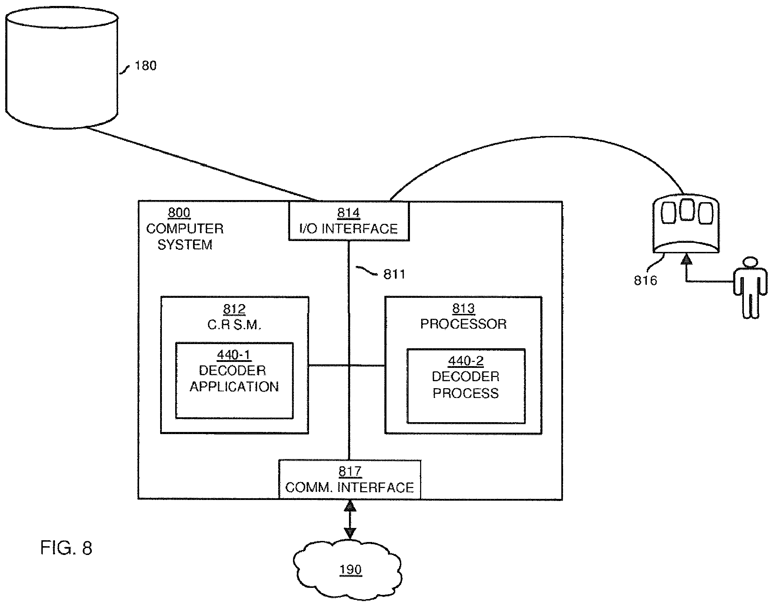

Figure 8 is an example block diagram of a computer system 800 that provides computer processing according to embodiments herein.

Computer system 800 can be or include a computerized device such as a personal computer, processing circuitry, workstation, portable computing device, console, network terminal, processing device, network device, operating as a switch, router, server, client, etc.

Note that the following discussion provides a basic embodiment indicating how to carry out functionality associated with decoder 440 as previously discussed. However, it should be noted that the actual configuration for carrying out the operations as described herein can vary depending on a respective application.

As shown, computer system 800 of the present example includes an interconnect 811 that couples computer readable storage media 812 such as a non-transitory type of media, computer readable, hardware storage medium, etc., in which digital information can be stored and retrieved. Computer system 800 can further include a processor 813, I/O interface 814, and a communications interface 817.

I/O interface 814 provides connectivity to repository 180, and if present, display screen, peripheral devices 816 such as a keyboard, a computer mouse, etc.

Computer readable storage medium 812 (e.g., a hardware storage media) can be any suitable device and/or hardware such as memory, optical storage, hard drive, floppy disk, etc. The computer readable storage medium can be a non-transitory storage media to store instructions associated with decoder application 440-1. The instructions are executed by a respective resource such as decoder 440 to perform any of the operations as discussed herein.

Communications interface 817 enables computer system 800 to communicate over network 190 to retrieve information from remote sources and communicate with other computers, switches, clients, servers, etc. I/O interface 814 also enables processor 813 to retrieve or attempt retrieval of stored information from repository 180.

As shown, computer readable storage media 812 can be encoded with decoder application 840-1 executed by processor 813 as switch resource process 840-2.

Note that the computer system 800 or decoder 440 also can be embodied to include a computer readable storage medium 812 (e.g., a hardware storage media, non-transitory storage media, etc.) for storing data and/or logic instructions.

Computer system 800 can include a processor 813 to execute such instructions and carry out operations as discussed herein. Accordingly, when executed, the code associated with decoder application 440-1 can support processing functionality as discussed herein. During operation of one embodiment, processor 813 accesses computer readable storage media 812 via the use of interconnect 811 in order to launch, run, execute, interpret or otherwise perform the instructions of decoder application 440-1 stored in computer readable storage medium 812. Execution of the decoder application 440-1 produces processing functionality in processor 813. In other words, the decoder process 440-2 associated with processor 813 represents one or more aspects of executing decoder application 440-1 within or upon the processor 813 in the computer system 800.

Those skilled in the art will understand that the computer system 800 can include other processes and/or software and hardware components, such as an operating system that controls allocation and use of hardware processing resources to execute decoder application 440-1.

In accordance with different embodiments, note that computer system may be any of various types of devices, including, but not limited to, a personal computer system, desktop computer, laptop, notebook, netbook computer, mainframe computer system, handheld computer, workstation, network computer, application server, storage device, a consumer electronics device such as a camera, camcorder, set top box, mobile device, video game console, handheld video game device, a peripheral device such as a switch, modem, router, or, in general, any type of computing or electronic device.

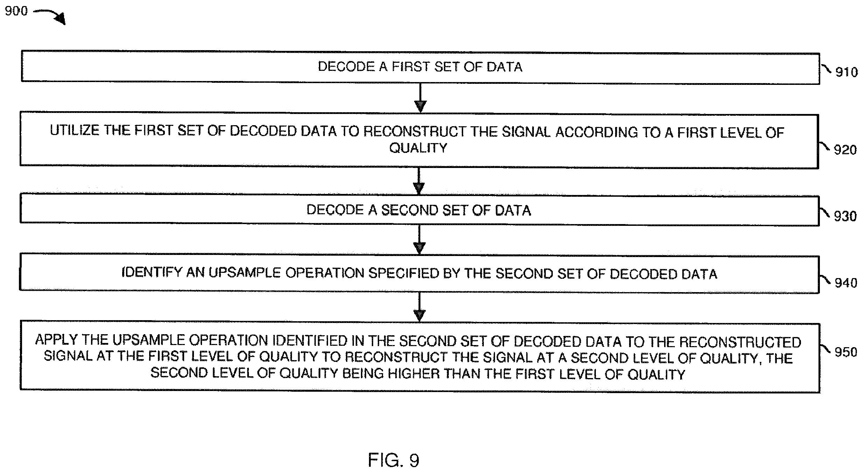

Functionality supported by components in decoder 440 will now be discussed via flowcharts in Figures 9-11. As discussed above, the decoder application 440-1 executed by a respective switch and/or other hardware can be configured to execute the steps in the flowcharts as discussed below.

Note that there will be some overlap with respect to concepts discussed above for Figures 1 through 8. Also, note that the steps in the flowcharts need not always be executed in the order shown. The steps can be executed in any suitable order.

Figure 9 is a flowchart 900 illustrating a method of reconstructing a signal at different levels of quality according to embodiments herein.

In step 910, the decoder 440 decodes a first set of data.

In step 920, the decoder 440 utilizes the first set of decoded data to reconstruct the signal 115 according to a first level of quality.

In step 930, the decoder 440 decodes a second set of data.

In step 940, the decoder 440 identifies an upsample operation specified by the second set of decoded data.

In step 950, the decoder 440 applies the upsample operation identified in the second set of decoded data to the reconstructed signal at the first level of quality to reconstruct the signal at a second level of quality.

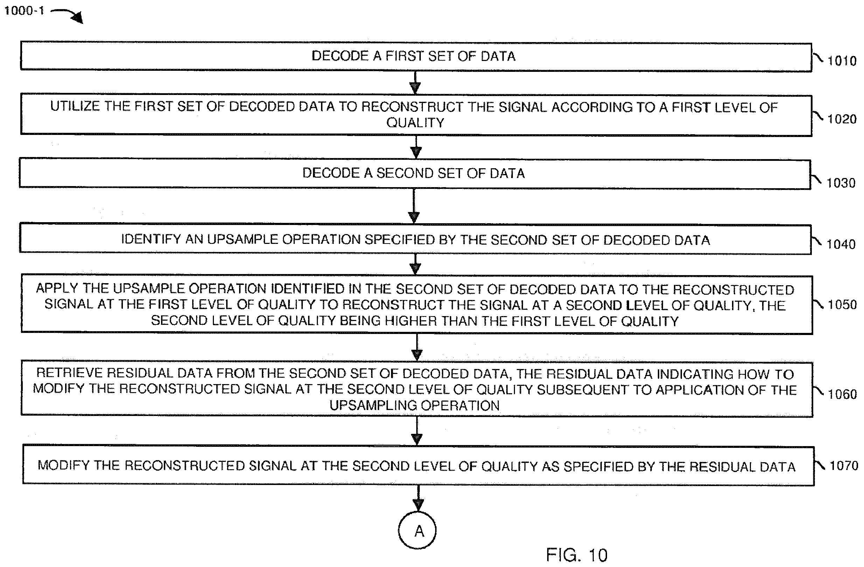

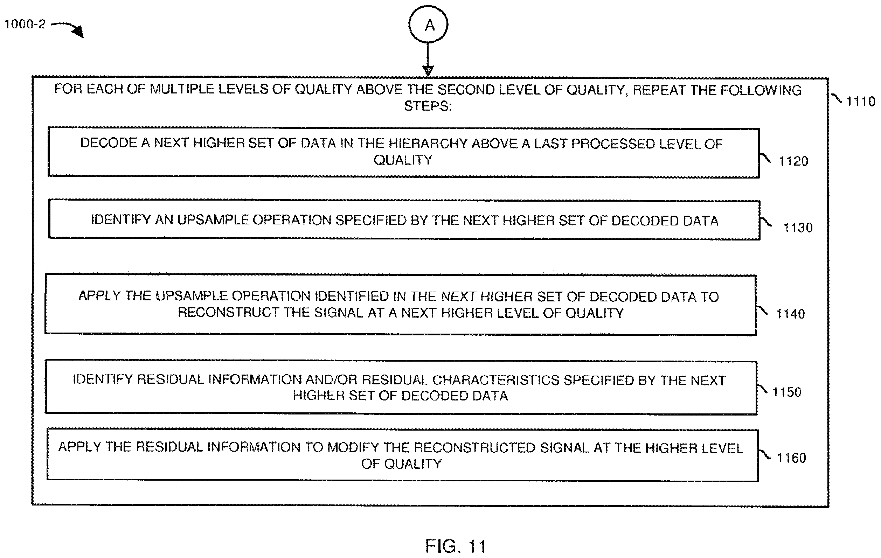

Figures 10 and 11 combine to form a flowchart 1000 (e.g., flowchart 1000-1 and flowchart 1000-2) illustrating decoding according to embodiments herein.

In step 1010, the decoder 440 decodes a first set of data.

In step 1020, the decoder 440 utilizes the first set of decoded data to reconstruct the signal 115 according to a first level of quality.

In step 1030, the decoder 440 decodes a second set of data.

In step 1040, the decoder 440 identifies an upsample operation and scale factor specified by the second set of decoded data.

In step 1050, the decoder 440 applies the upsample operation and scale factor identified in the second set of decoded data to the reconstructed signal at the first level of quality to reconstruct the signal 115 at a second level of quality.

In step 1060, the decoder 440 retrieves residual data from the second set of decoded data. The residual data indicates how to modify the reconstructed signal at the second level of quality subsequent to application of the upsampling operation.

In step 1070, the decoder 440 modifies the reconstructed signal at the second level of quality as specified by the residual data.

In step 1110, for each of multiple levels of quality above the second level of quality in the hierarchy, the decoder 440 repeats the following steps:
In sub-step 1120, the decoder 440 decodes a next higher set of data in the hierarchy above a last processed level of quality.

In sub-step 1130, the decoder 440 identifies an upsample operation and scale factor specified by the next higher set of decoded data.

In sub-step 1140, the decoder 440 applies the upsample operation and scale factor identified in the next higher set of decoded data to reconstruct the signal 115 at a next higher level of quality.

In sub-step 1150, the decoder 440 identifies residual information and/or residual characteristics specified by the next higher set of decoded data.

In sub-step 1160, the decoder 440 applies the residual information to modify the reconstructed signal at the higher level of quality.

Note again that techniques herein are well suited for use in processing and reconstructing signals using a decoder. However, it should be noted that embodiments herein are not limited to use in such applications and that the techniques discussed herein are well suited for other applications as well.

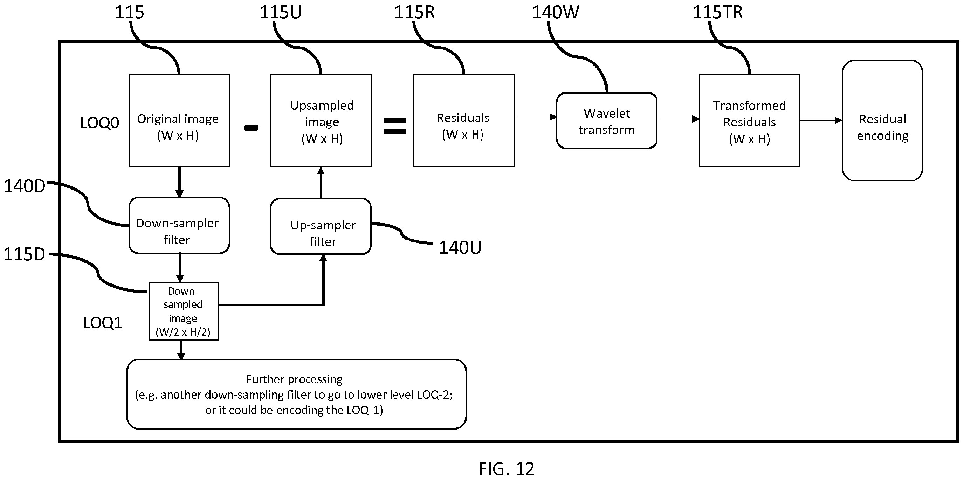

Figure 12 is a schematic diagram illustrating an embodiment of the invention.

A modified encoder 140 is shown in which an original image (or signal) 115 is downsampled by downsampling filter 140D to create downsampled image 115D. The downsampling operation may be performed using any of the methods and techniques described above (e.g. using a linear filter such as a Gaussian filter).

The downsampled image 115D is upsampled by upsampling filter 140U to create upsampled image 115U. The upsampling operation may be performed using any of the methods and techniques described above (e.g. using a linear filter such as a Gaussian filter).

In this example, the resolution of the image is reduced by downsampling, and restored by upsampling, but other quality metrics of an image (or signal) may be reduced and restored as foreshadowed and described in greater detail earlier in this description.

The up-sampled image 115U is compared with the original image 115 to produce residual data 115R (e.g., matrix of difference data). The residual data 115R allows the downsampled image 115D to be upsampled and corrected to reproduce the original image 115, as discussed in greater length earlier in this description.

The residual data 115R is transformed using a wavelet transform 140W to produce transformed residuals 115TR, which may then be quantized and compressed using known techniques.

Additionally, the downsampled image 115D may be further downsampled to go to a lower level of quality, which is then upsampled and compared to the downsampled image 115D to create further residual data, which in turn is transformed using a wavelet transform and the transformed residuals are quantized and compressed. In this way, versions of the original image 115 at multiple levels of quality are obtained.

Using a wavelet transform on the residual data 115R as opposed to using wavelet transforms on the original image 115 (for example, as taught by JPEG2000 and related technologies) allows for a more flexible approach to encoding the original image 115, because a symmetrical wavelet need not be used during downsampling and upsampling processes, and more flexibility and better encoding results can be achieved by choosing appropriate downsampling and upsampling filters as required, and by tweaking them accordingly based on the particular application. Also, for scalable images such as those described, there are advantages to using linear downsampling filters that are not wavelet transforms, in that wavelet transforms produce redundancies that do not exist with non-linear downsampling filters, and that those redundancies need not be encoded. In many cases, the downsampled images produced by wavelet transforms are not as suitable to upscaling as those downsampled images produced by linear filters, such as a Gaussian filter.

The downsampling filter may be any suitable filter, but is optionally a linear filter, such as a Gaussian filter or a Lanczos filter.

The upsampling filter may be any suitable filter, but is optionally a non-linear filter, such as a bicubic or tricubic filter.

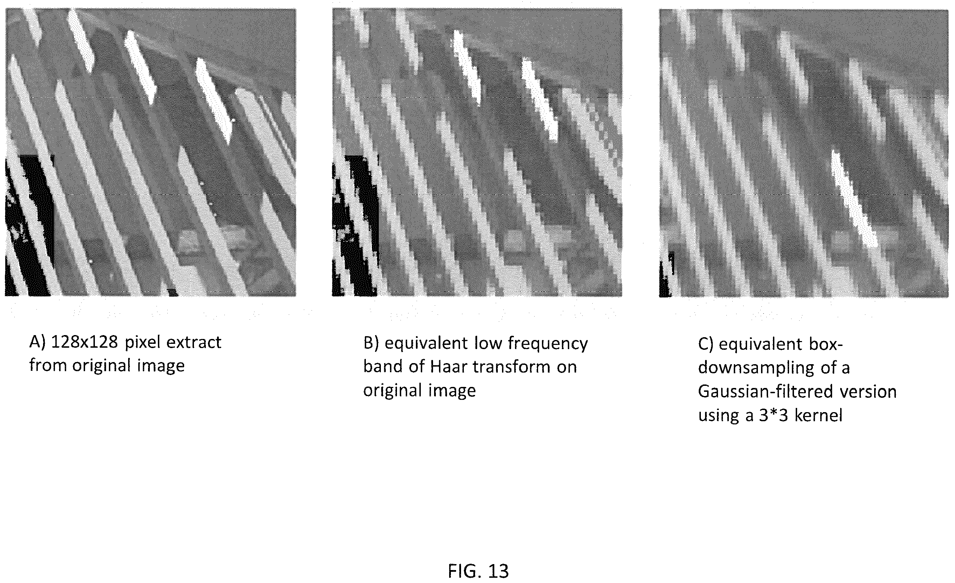

Figure 13 shows an example of an original image and two different downsampled versions of the original image.

The 128*128 pixel extract from an original image is drawn enlarged for clarity (A), along with two lower resolution 64*64 versions of the same region, also enlarged. The first low-resolution image (B) is the low frequency band of a Haar transform of the original as used in existing wavelet compression techniques, whereas the second (C) is the box-downsampling of a Gaussian-filtered version of the original using a 3*3 kernel. The latter, despite some blurring, is a better visual match to the original.

As discussed, when an approximation to a lower-resolution image is available at a decoder, residuals can be added to improve an upsampled version of the lower-resolution image. We have found that it is better for the lower-resolution image to be of type C rather than of type B. The production of the lower-resolution image happens in the image domain. However, once the residuals have been calculated, it is possible and advantageous to use a wavelet transform and quantization to compress them, since this happens in the residual domain. The advantages of using linear filters for downsampling remain.

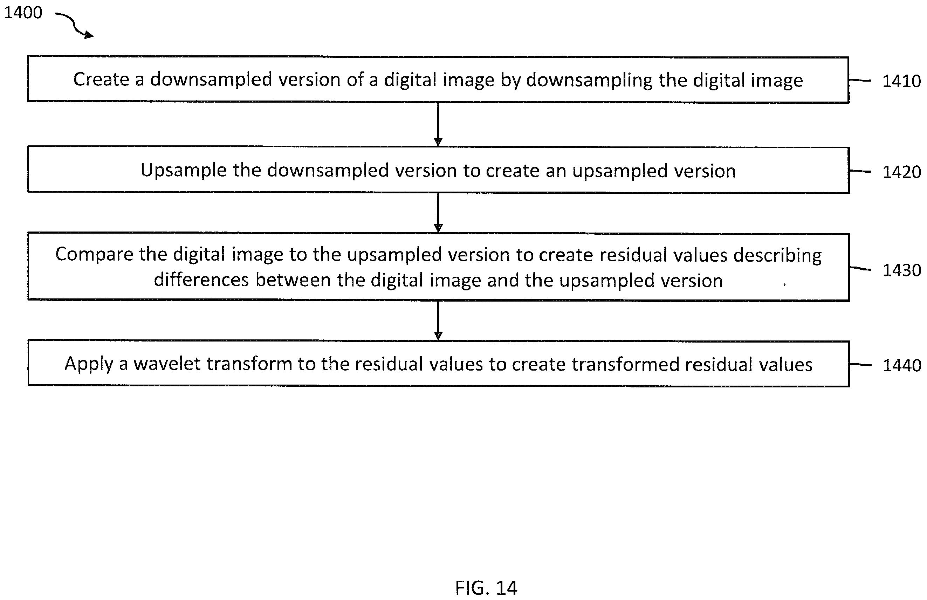

Figure 14 is a flowchart showing a method 1400 of processing digital images.

At step 1410, the method creates a downsampled version of a digital image by downsampling the digital image.

At step 1420, the method upsamples the downsampled version to create an upsampled version.

At step 1410, the method compares the digital image to the upsampled version to create residual values describing differences between the digital image and the upsampled version.

At step 1410, the method creates applies a wavelet transform to the residual values to create transformed residual values.

Based on the description set forth herein, numerous specific details have been set forth to provide a thorough understanding of claimed subject matter. However, it will be understood by those skilled in the art that claimed subject matter may be practiced without these specific details. In other instances, methods, apparatuses, systems, etc., that would be known by one of ordinary skill have not been described in detail so as not to obscure claimed subject matter. Some portions of the detailed description have been presented in terms of algorithms or symbolic representations of operations on data bits or binary digital signals stored within a computing system memory, such as a computer memory. These algorithmic descriptions or representations are examples of techniques used by those of ordinary skill in the data processing arts to convey the substance of their work to others skilled in the art. An algorithm as described herein, and generally, is considered to be a self-consistent sequence of operations or similar processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals or the like. It should be understood, however, that all of these and similar terms are to be associated with appropriate physical quantities and are merely convenient labels. Unless specifically stated otherwise, as apparent from the following discussion, it is appreciated that throughout this specification discussions utilizing terms such as "processing," "computing," "calculating," "determining" or the like refer to actions or processes of a computing platform, such as a computer or a similar electronic computing device, that manipulates or transforms data represented as physical electronic or magnetic quantities within memories, registers, or other information storage devices, transmission devices, or display devices of the computing platform.

While this invention has been particularly shown and described with references to preferred embodiments thereof, it will be understood by those skilled in the art that various changes in form and details may be made therein without departing from the spirit and scope of the present application as defined by the appended claims. Such variations are intended to be covered by the scope of this present application. As such, the foregoing description of embodiments of the present application is not intended to be limiting. Rather, any limitations to the invention are presented in the following claims.

## Claims

**1.** A method of processing digital images, the method comprising:
creating a downsampled version of a digital image by downsampling the digital image;
upsampling the downsampled version to create an upsampled version;
comparing the digital image to the upsampled version to create residual values describing differences between the digital image and the upsampled version;
applying a wavelet transform to the residual values to create transformed residual values.

**2.** The method of claim 1, wherein the downsampling uses a downsampling filter.

**3.** The method of claim 2, wherein the downsampling filter is one of: a linear filter and a non-linear filter.

**4.** The method of claim 3, wherein the downsampling filter is a linear filter.

**5.** The method of claim 4, wherein the linear filter is one of: a Gaussian filter and a Lanczos filter:

**6.** The method of any preceding claim, wherein the upsampling uses an upsampling filter.

**7.** The method of claim 6, wherein the upsampling filter is a non-linear filter.

**8.** The method of claim 7, wherein the non-linear filter is one of a bicubic or tricubic filter.

**9.** The method of any preceding claim, wherein one or both of the downsampling and the upsampling do not use a wavelet transform.

**10.** The method of any preceding claim, wherein the downsampled version is further downsampled to a lower level version, and the lower level version is upsampled and compared with the downsampled version to create a second set of residual values at a lower level than the residual values, and the second set of residual values are transformed using a wavelet transform.

**11.** The method of any preceding claim, wherein the lowermost downsampled version and the transformed residual values are sent to a decoder to reconstruct the digital image.

**10.** The method of any preceding claim, wherein the downsampling is spatial downsampling from one resolution level to a lower resolution level.

**11.** The method of any preceding claim, wherein the digital image is a frame of a video signal.

**12.** The method of any preceding claim, wherein the wavelet transform is a Haar wavelet.

**13.** An encoder comprising:
an input to receive a signal for encoding; and
a processor and memory configured to implement the method of any of claims 1 to 12.

**14.** A computer-readable medium having recorded thereon instructions to perform the method of any of claims 1 to 12.
